# EUROPEAN PATENT APPLICATION

(11) **EP 4 424 896 A1**
(43) Date of publication of application: **04.09.2024**
(21) Application number: 22885146.5
(22) Date of filing: 22.06.2022
(51) Int. Cl.: D04H 3/16, D04H 3/011, D04H 3/007, D04H 3/009, D04H 1/56, D04H 1/544, D04H 1/549, D04H 1/55, B60R 13/02

(54) **THERMOPLASTIC FIBER MESH STRUCTURE AND AUTOMOTIVE INTERIOR TRIM PART**

(30) Priority: 29.10.2021 CN 202111268981
(71) Applicant: Yanfeng International Automotive Technology Co., Ltd., Shanghai 201306 (CN)
(72) Inventor: CHU, Yeqian, Shanghai 201306 (CN); JIANG, Minjie, Shanghai 201306 (CN); ZHANG, Baoyin, Shanghai 201306 (CN); SUN, Jie, Shanghai 201306 (CN); XU, Wei, Shanghai 201306 (CN)
(74) Representative: Colombo, Stefano Paolo
(86) International application number: PCT/CN2022/100485
(87) International publication number: WO 2023/071240

(57) **Abstract**

The present disclosure relates to a thermoplastic fiber web structure (2a, 2b, 2c, 2d), which forms a support structure through fiber filaments (21a, 21h, 21i, 21k, 21l, 21m, 21n, 21q) that are melt-bonded together, the fiber filaments being formed from a thermoplastic elastomer material. The present disclosure further relates to an automobile interior part comprising a thermoplastic fiber web structure as described above and a sleeve and/or fabric (1a, 1b, 1c, 1d) fastened to the thermoplastic fiber web structure. The thermoplastic fiber web structure forms a support structure by melt extrusion of a thermoplastic elastomer material into a three-dimensional network structure, which has high resilience and recyclability. The automobile interior part, at the same time of ensuring support and comfort, achieves environmental protection, breathability and light weight. In particular, the thermoplastic material is subjected to a physical reaction rather than a chemical reaction during the melt extrusion process, so that the stability in the preparation process is better, and the product can be smoothly and controllably made. In addition, considering that conventional sleeve foaming fastening form cannot be applied to the thermoplastic fiber web structure, a completely novel fastening form is provided for the automobile interior part to match the wrapping of the thermoplastic fiber web structure.

## Description

### Technical field

The present disclosure relates to an automobile, in particular to a thermoplastic fiber web structure and an automobile interior part.

### Background art

The support structures of conventional automobile interior parts such as seat backrests, seat cushions, head rests, armrests, leg rests and the like are polyurethane foams for vehicles, which are thermoset materials, and cannot be recycled after products are discarded. Moreover, carbon dioxide may be generated during the manufacturing process, thereby increasing carbon emission. Meanwhile, polyurethane foaming is a chemical reaction, which may produce VOC, odor and the like, and moreover. In some cases, products may have the defects of incomplete molding, uneven big cellular structure inside the product and the like, and the stability of products may be uncontrollable.

In addition, in a conventional manufacturing process, a support structure having a uniform density or hardness is typically formed from raw material, wherein individual fiber filaments are typically bent to form random loops, thereby forming a random distribution and stacking in the support structure. It has been found that such a support structure having an overall uniform density and hardness or a random distribution and stacking of random loops formed by fiber filaments in the support structure may affect negatively the comfort of users because the support needs are different for different parts of user's body, but the product having a uniform density or comprising randomly distributed and packed fiber filaments cannot provide users with a comfortable support (e.g., the flank parts of backrests require a higher support performance than the middle part, and thus shall have higher density and hardness).

### Disclosure of the invention

In order to solve the problems caused by polyurethane foams in the prior art, the present disclosure provides a thermoplastic fiber web structure and an automatic inter part, which is recyclable and reusable.

According to a first aspect, the present disclosure relates to a thermoplastic fiber web structure, which forms a support structure through fiber filaments that are melt-bonded together, the fiber filaments being formed from a thermoplastic elastomer material.

In a further preferred embodiment, the present disclosure relates to a thermoplastic fiber web structure, which forms a support structure through fiber filaments that are melt-bonded together, the fiber filaments being formed from a thermoplastic elastomer material, characterized in that the thermoplastic fiber web structure has at least two local regions with different densities, and the density difference of the at least two local regions is 5 to 70 kg/m³, preferably 10 to 50 kg/m³ or 15 to 30 kg/m³. In this preferred embodiment, a density difference of less than 5 kg/m³ or greater than 70 kg/m³ may result in a final product that is locally too soft or hard, thereby compromising comfort and support. Furthermore, the inventors have also found that the at least two local regions having different densities with the density difference controlled within the required range can be very beneficial to improve the comfort in use, and also beneficial to make the product into various shapes during the formation of the thermoplastic fiber web, thereby facilitating the forming process.

In another preferred embodiment, the present disclosure relates to a thermoplastic fiber web structure, which forms a support structure through fiber filaments that are melt-bonded together, the fiber filaments being formed from a thermoplastic elastomer material, characterized in that the fiber filaments are distributed in the thermoplastic fiber web structure partly or wholly in an ordered arrangement and stacking manner. The inventors have found that disposing the fiber filaments in a non-random distribution and stacking manner (i.e., ordered distribution and stacking) in the support structure can also be beneficial to improve the comfort in use of the thermoplastic fiber web structure.

In the context of the present disclosure, the thermoplastic fiber web structure is formed from fiber filaments that are melt-bonded together by themselves, which can be used as a support structure for seat backrests, seat cushions, head rests, armrests, leg rests and the like. In an advantageous embodiment, the thermoplastic fiber web structure comprises a plurality of local regions with different densities, preferably at least 2, 3 or 4 such regions. In the context of the present disclosure, the local region refers to a space formed by filling and distributing of fiber filaments. The arrangement of these regions in the thermoplastic fiber web structure is not limited, and may include, for example, a vertical or horizontal arrangement, a core-shell arrangement, an island-like arrangement, or the like. Preferably, each of these local regions with different densities represents at least 5%, 10%, 20% or 30% or more of the volume of the thermoplastic fiber web structure. Preferably, the density difference between at least two adjacent local regions is in the required range of 5 to 70 kg/m³. Furthermore, the fiber filaments in at least one of the at least two local regions may be contained therein in an ordered or random distribution and stacking manner.

Preferably, the thermoplastic elastomer is at least one selected from polyolefin elastomers, polyester elastomers and polyamide elastomers.

Preferably, the polyolefin elastomer is a polyalphaolefin elastomer.

Preferably, the hard segment of the polyester elastomer includes polybutylene terephthalate or polyethylene terephthalate, and the soft segment includes a polyester segment or a polyether segment.

Preferably, the polyamide elastomer is a nylon elastomer. It should be understood that the hard segment of the nylon elastomer is a polyamide segment of unlimited length, and the soft segment is a polyether segment or a polyester segment. Nylon 6 or nylon 66 may be named as examples.

In general, a thermoplastic fiber web structure can have a uniform or locally different density and hardness through the density distribution of the fiber filaments. In the present disclosure, the required density difference between different local regions can be achieved by various means, for example, by making different local regions have sparse or dense distributions of the same or different fiber filaments, or using fiber filaments made of elastomer materials with different hardnesses (achieved such as by adopting different hard and soft segment ratios, different wall thicknesses of hollow fiber filaments and different diameters of solid fiber filaments) in different local regions, or any combination of these different means.

In an advantageous embodiment, at least two local regions in the thermoplastic fiber web structure have different density distributions of fiber filaments. In the present disclosure, the density distribution of fiber filaments refers to the amount of fiber filaments in a given region or unit volume. For the same type of fiber filaments, different densities can be achieved by comprising different amounts in different regions.

As described above, in addition to the disposition of at least two local regions having a specified density difference in the thermoplastic fiber web structure, the distribution of the fiber filaments in the thermoplastic fiber web structure partly or wholly in an orderly arrangement and stacking manner can also improve the comfort. In the present disclosure, the term "ordered arrangement and stacking", which is in contrast to the bending of individual continuous strands to form random loops and the random distribution and stacking of such loops in a structure, means that some or all of the fiber filaments (e.g., at least 30% or more, such as at least 50%, at least 65%, 80%, or 90% or all of the fiber filaments) in a structure or local region are distributed and packed in an ordered manner, such as in a patterned manner, in the structure or local region. Such an ordered distribution and stacking can be viewed from a cross section across in a certain dimension the thermoplastic fiber web structure (preferably a cross section in a direction substantially vertical to the linear arrangement of fiber strands). It can be achieved by shaping the fiber filaments or fiber strands, for example by twisting and kinking the fiber filaments or fiber strands. Thereby, a regular geometric shape can be formed. The fiber strands, which are in an ordered distribution and stacking manner, can, for example, have an M-shape, a C-shape, an X-shape, a zigzag shape, a wavy shape or the like, when viewed in the cross section. Such ordered arrangement and stacking can be achieved in various ways. In an advantageous embodiment, nozzles for hot-melt ejection of the fiber filaments are intentionally arranged in the extrusion process of the fiber filaments in such a way that they are arranged more densely in a defined region (i.e. the region intended to be shaped) than in the remaining surrounding regions, and the extruded fiber strands are twisted and kinked with each other in this defined region to form the corresponding shape by means of the design of the arrangement of the nozzles. Thus, the fiber strands ejected from the nozzles may have, for example, an M-shape, a C-shape, an X-shape, a zigzag shape, a wavy shape or the like, when viewed from a cross section in a certain dimension (preferably a cross section in a direction substantially vertical to the linear arrangement of the fiber strands).

In an advantageous embodiment, the two comfort-improving solutions mentioned above can be combined with each other. In another word, the thermoplastic fiber web structure may have at least two local regions having different densities with the density difference of the at least two local regions being 5 to 70 kg/m³, and the fiber filaments in at least one local region may be distributed therein partly or wholly in an orderly arrangement and stacking manner. In general, a thermoplastic fiber web structure can have a uniform or locally different support by virtue of the shaping distribution of the fiber filaments.

Individual fiber filaments may have a cross-section in various shapes, such as a solid cross-section, a hollow cross-section, a circular cross-section, a polygonal cross-section, or other complex cross-sections. Preferably, the fiber filaments are hollow filaments and/or solid filaments. For example, different densities may be formed in different regions by using appropriate amounts of hollow and solid fiber filaments, separately or in combination.

Preferably, the wall thickness of the hollow fiber filaments is between 0.1 and 1 mm, and/or the diameter of the solid fiber filaments is between 0.5 and 2 mm, preferably between 0.5 and 1.0 mm.

To prepare a thermoplastic fiber web structure having at least two local regions with different densities, processes such as melt extrusion, 3D printing and injection molding may be used. For example, in the melt extrusion process, in order to achieve the local regions with different densities, it is possible to extrude the local regions consisting of materials with different densities through an extrusion head by adjusting the pore structure, sparse or dense arrangement and pore size of the extrusion die, or directly extrude sheets or blocks with defined different densities which are then die-cast to form a thermoplastic fiber web structure consisting of multiple local regions with different densities.

Preferably, the overall density of the thermoplastic fiber web structure is between 25 and 150 kg/m³, preferably between 35 and 120 kg/m³, more preferably between 45 and 90 kg/m³.

According to a second aspect, the present disclosure relates to an automobile interior part comprising a thermoplastic fiber web structure as described above and a sleeve and/or fabric fastened to the thermoplastic fiber web structure. In a preferred embodiment, the interior part contains a fabric that can prevent frictional noise and prevent the fiber web from being frayed or torn by rubbing against the carcass. The fabric can include non-woven fabrics, woven fabrics or felts and the like, which may be made, for example, from PET, PP, PES, PE, TPEE and the like or mixtures thereof.

Preferably, the automobile interior part is a seat backrest, a seat cushion, a head rest, an armrest, or a leg rest.

Preferably, the sleeve has a sleeve strip that is hook fixed and connected to the thermoplastic fiber web structure by a fastener having an opening. In a preferred embodiment, the fastener is a C-shaped ring. It should be understood that the form of the fastener is not limited to C-shaped but can also be U-shaped with an opening to facilitate fixing.

The material of the fastener may be the same as or different from that of the thermoplastic fiber web structure. Preferably, the material of the fastener is the same as that of the thermoplastic fiber web structure. It should be understood that the same materials, such as those thermoplastic materials described above, may be advantageously recycled. But different materials may be also used, such as metals, plastics, elastomers and other fixable materials.

Preferably, the fastening window of the thermoplastic fiber web structure corresponding to the fastener is compacted.

Preferably, the interior part comprises a fabric having a formed steel wire, the sleeve strip and the formed steel wire being hook fixed and connected to the thermoplastic fiber web structure by a fastener.

Preferably, the sleeve has a thermoplastic strip that is melt fixed and connected to the thermoplastic fiber web structure.

Preferably, the material of the thermoplastic strip may be the same as that of the thermoplastic fiber web structure. It should be understood that the same materials may be advantageously recycled, but different materials may be also used, such as metals, plastics, elastomers and other fixable materials.

Preferably, the sleeve has an I-shaped or Y-shaped plastic piece that can rotate after insertion into the thermoplastic fiber web structure to fix and connect the sleeve to the thermoplastic fiber web structure.

Preferably, the fabric is fixed to the thermoplastic fiber web structure by means of an adhesive. It should be understood that the fabric may be self-adhesive and thus directly adhered to the thermoplastic fiber web structure.

The thermoplastic fiber web structure according to the present disclosure forms a support structure by melt extrusion of a thermoplastic elastomer material into a three-dimensional network structure, and it is characterized by high resilience and recyclability. Furthermore, in the preferred embodiments, due to the fact that it has a plurality of regions with different densities and/or the fiber filaments therein are contained in the structure partly or wholly in an orderly distribution and stacking manner as described above, the thermoplastic fiber web structure as well as the automobile interior part made therefrom can result in the significantly improved support and comfort while simultaneously achieving environmental protection, breathability and light weight. In particular, because the thermoplastic material is subjected to a physical reaction rather than a chemical reaction in the melt extrusion process, the stability in the preparation process can be better and the product can be made in a smooth and controllable manner. In addition, considering that the conventional foaming fastening forms for sleeves cannot be applied to the thermoplastic fiber web structure, a completely novel fastening form is provided for the automobile interior part of the present disclosure to match the wrapping of the thermoplastic fiber web structure.

### Description of figures

FIG. 1 is a partial schematic diagram of an automobile interior part according to a preferred embodiment of the present disclosure;
FIG. 2 is a schematic diagram of the thermoplastic fiber web structure of FIG. 1;
FIG. 3 shows a variant of FIG. 1;
FIG. 4 is a schematic view of the structure of the fiber filament of FIG. 2;
FIG. 5 shows a variant of FIG. 4;
FIG. 6 shows a variant of FIG. 2;
FIG. 7 shows another variant of FIG. 2;
FIG. 8 shows yet another variant of FIG. 2;
FIG. 9 shows yet another variant of FIG. 2;
FIG. 10 shows yet another variant of FIG. 2;
FIG. 11 is a schematic diagram of a partial assembly of an automobile interior part according to another preferred embodiment of the present disclosure;
FIG. 12 is a schematic diagram of the force on the thermoplastic fiber web structure of FIG. 11;
FIG. 13 shows a variant of FIG. 12;
FIG. 14 shows another variant of FIG. 12;
FIG. 15 shows yet another variant of FIG. 12;
FIG. 16 shows yet another variant of FIG. 12;
FIG. 17 shows yet another variant of FIG. 12;
FIG. 18 shows yet another variant of FIG. 12;
FIG. 19 shows yet another variant of FIG. 12;
FIG. 20 shows yet another variant of FIG. 12;
FIG. 21 is a partial schematic view of an automobile interior part according to yet another preferred embodiment of the present disclosure;
FIG. 22 is a schematic diagram of the thermoplastic fiber web structure of FIG. 21;
FIG. 23 is a partial schematic view of an automobile interior part according to yet another preferred embodiment of the present disclosure;
FIG. 24 is a partial schematic view of an automobile interior part according to yet another preferred embodiment of the present disclosure;
FIG. 25 is a variant according to the present disclosure;
FIG. 26 is another variant according to the present disclosure;
FIG. 27 is yet another variant according to the present disclosure.

### Embodiments of carrying out the invention

The preferred examples of the present disclosure are given below, which are described in detail in combination of the figures.

### Example 1

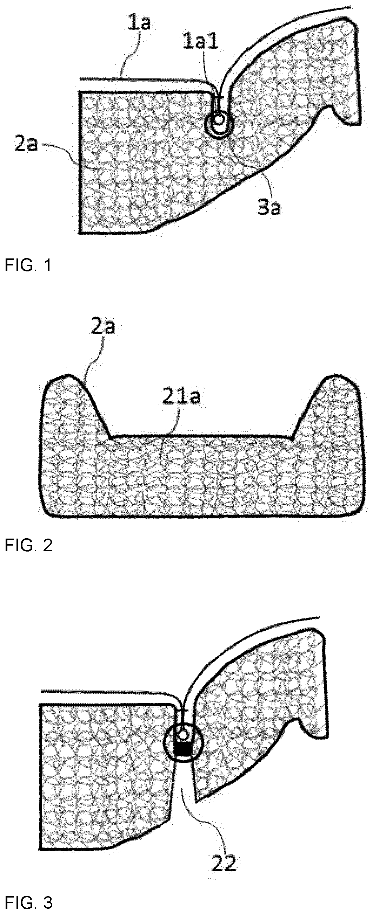

As shown in FIG. 1, an automobile interior part according to a preferred embodiment of the present disclosure is a seat backrest which comprises a sleeve 1a and a thermoplastic fiber web structure 2a forming a support structure. As shown in FIG. 2, the thermoplastic fiber web structure 2a is formed of polyester elastomer fiber filaments 21a (hard segment is polybutylene terephthalate or polyethylene terephthalate, and soft segment is a polyester segment or polyether segment) which are melt-bonded together themselves through melt extrusion. Returning to FIG. 1, the sleeve 1a has a sleeve strip 1a1, which is hook fixed and connected to the thermoplastic fiber web structure 2a by a C-shaped ring 3a which material is of polyester elastomer fibers. In this way, the material of the C-shaped ring 3a connecting the sleeve 1a and the thermoplastic fiber web structure 2a is the same as the material of the thermoplastic fiber web structure 2a, which are both a thermoplastic recyclable material. To enhance the stability, the fastening window 22 of the thermoplastic fiber web structure is compacted, as shown in FIG. 3, so as to improve hooking stability and provide a strong connection.

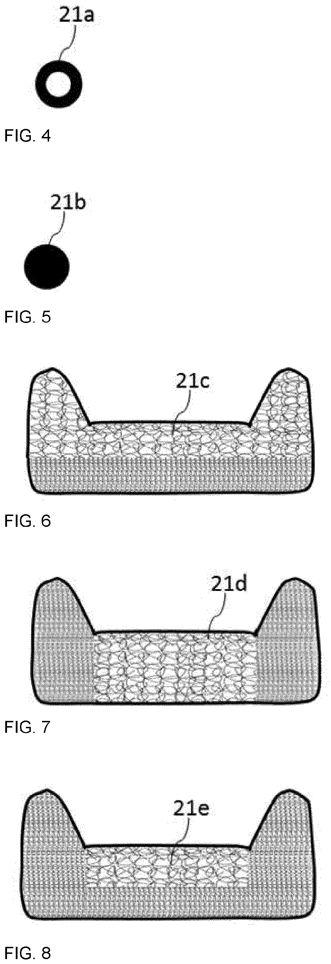

In this embodiment, the polyester elastomer fiber filaments 21a are hollow filaments, and the wall thickness of the hollow polyester elastomer fiber filaments 21a is 0.2 mm, as shown in FIG. 4. In another embodiment, the polyester elastomer fiber filaments 21b may be solid filaments, as shown in FIG. 5, the solid polyester elastomer fiber filaments 21b having a diameter of 1 mm. It should be understood that the softness/hardness of the automobile interior part can be adjusted by adjusting the wall thickness or diameter of the fiber filaments. Preferably, the wall thickness or diameter of the fiber filaments can be adjusted in the range of 0.1 to 2 mm. In particular, the wall thickness of the hollow filaments can be adjusted in the range of 0.1 to 1 mm, while the diameter of the solid filaments can be adjusted in the range of 0.5 to 2 mm.

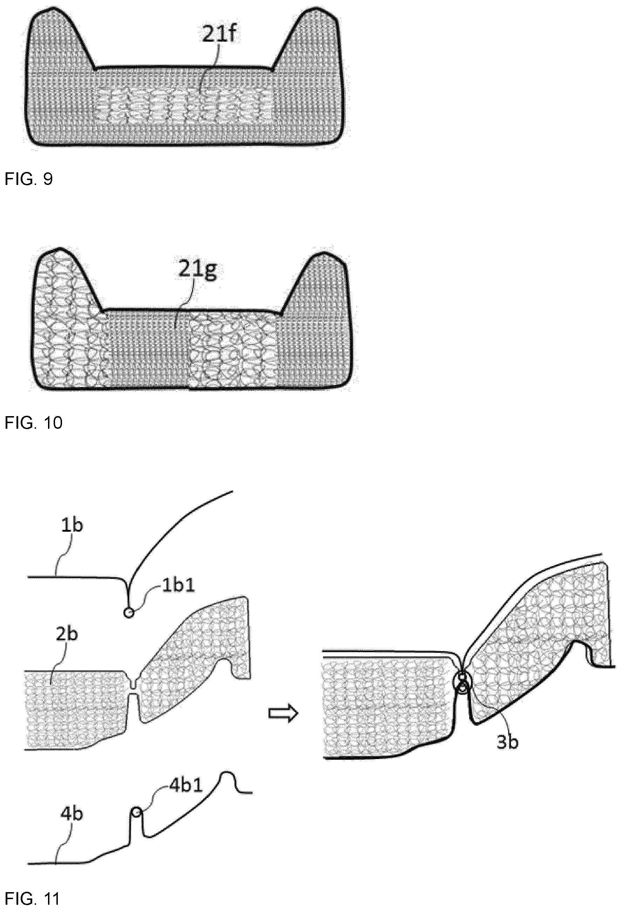

In this embodiment, as shown in FIG. 2, the polyester elastomer fiber filaments 21a are uniformly distributed in each region of the seat backrest, so that the seat backrest has a single density (e.g., 80 kg/m³) and hardness (e.g., 10 kpa). In another embodiment, the polyester elastomer fiber filaments 21c are distributed in such a way that the density of the upper part is low and the density of the lower part is high, as shown in FIG. 6, so that the seat backrest has different densities and hardnesses from top to bottom, i.e. forming two local regions having different densities with the upper part having a density of 30 kg/m³ and the lower part having a density of 90 kg/m³. In yet another embodiment, the polyester elastomer fiber filaments 21d are distributed in such a way that the density in the middle is low and the density on two flanks is high, as shown in FIG. 7, so that the seat backrest has different densities and hardnesses from the flanks to the middle, i.e. forming three local regions with different densities. Here, the density of the flank parts is 80 kg/m³, and the density of the middle part is 60 kg/m³. In yet another embodiment, the polyester elastomer fiber filaments 21e are distributed in such a way that the density of the support part on the two flanks and the middle lower part is high, and the density on the middle upper part is low, as shown in FIG. 8, so that the seat backrest has locally different densities and hardnesses, i.e., forming two local regions with different densities. Here, the density of the flank parts and the middle lower part is 75 kg/m³, and the density of the middle upper part is 50 kg/m³. In yet another embodiment, the polyester elastomer fiber filaments 21f are distributed in such a way that the density of the middle inner part is low and the density of the middle outer part and the flank part is high, as shown in FIG. 9, so that the seat backrest has locally different densities and hardnesses, i.e., forming two local regions with different densities. In yet another embodiment, the polyester elastomer fiber filaments 21g are distributed in such a way that the density of the middle right part and the left flank is low and the density of the middle left part and the right flank is high, as shown in FIG. 10, so that the seat backrest has locally different densities and hardnesses, that is, forming four local regions having different densities. In this example, the thermoplastic fiber web structure 2a is controlled to have an overall density in the range of 40 to 90 kg/m³ and a hardness in the range of 4 to 15 kpa, regardless of whether it has a uniform density or has local regions with a plurality of different densities.

### Example 2

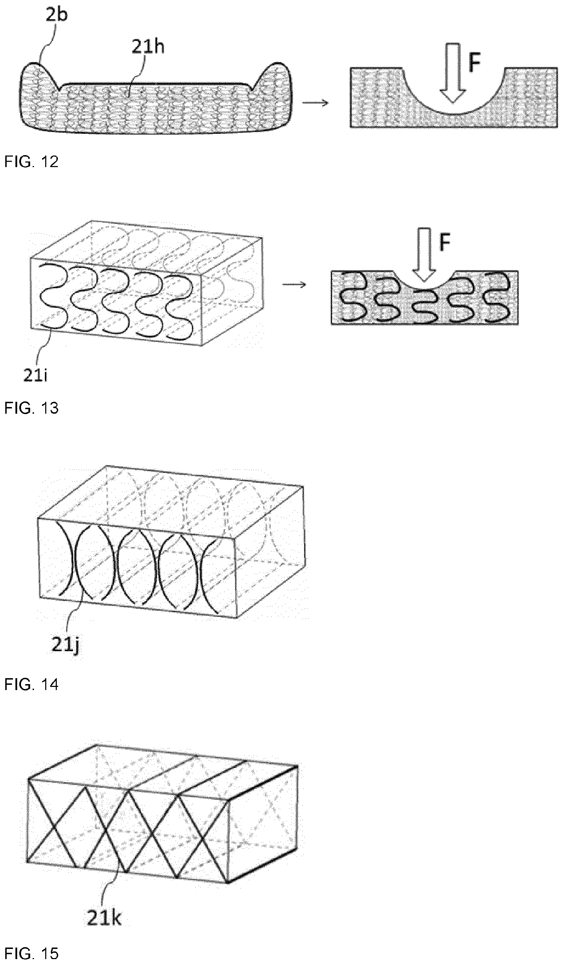

As shown in FIG. 11, an automobile interior part according to another preferred embodiment of the present disclosure is a seat cushion, which comprises a sleeve 1b, a thermoplastic fiber web structure 2b forming a support structure and a felt 4b. As shown in FIG. 12, the thermoplastic fiber web structure 2b is formed of polyalphaolefin elastomer filaments 21h which are melt-bonded together through 3D printing. Returning to FIG. 11, the sleeve 1b has a sleeve strip 1b1, and the felt 4b has a formed steel wire 4b1, both of which are hook fixed and connected to the thermoplastic fiber web structure 2b by a C-shaped ring 3b. The material of the C-shaped ring is the same as the material of the thermoplastic fiber web structure 2b, both of which are polyolefin materials, thereby providing a strong fixing force.

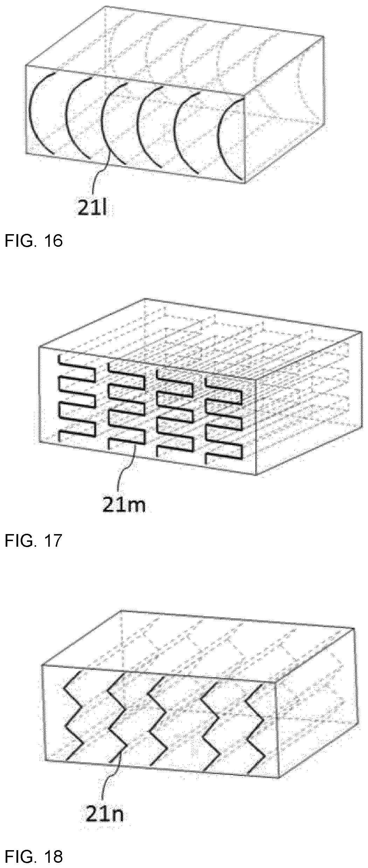

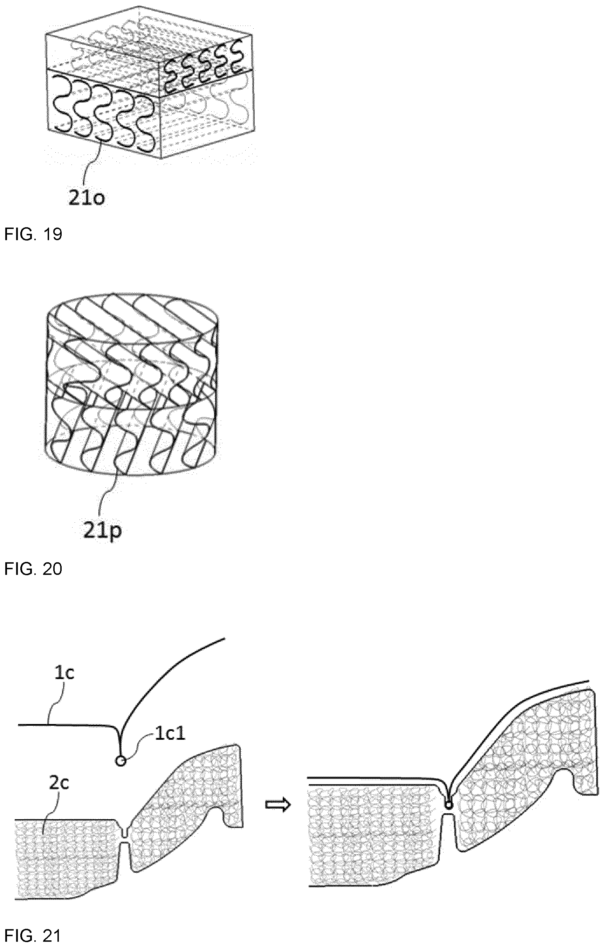

In this embodiment, as shown in FIG. 12, the polyalphaolefin elastomer filaments 21h are uniformly distributed in each region of the seat cushion, so that the seat cushion has a uniform support. In other embodiments, the fiber filaments 21i, 21j, 21k, 21l, 21m, 21n are shaped to be distributed in an ordered arrangement and stacking manner in local regions or fiber web structure, as shown in FIG. 13 - FIG. 18, so as to strengthen the support of the seat cushion in the regions that need to be supported. Taking the fiber filaments 21i as an example, it is possible to arrange nozzles more densely in the region that is intended to be shaped so as to form a distinct S-shaped (viewed in a cross section) ordered arrangement of the fiber filaments extruded in this region. In other possible variants, individual local regions consisting of the fiber filaments 21i, 21j, 21k, 21l, 21m, 21n with different shapes and distributions may be superimposed or combined to form at least two local regions having different densities. For example, the fiber filaments 21o, 21p are shaped in superimposition, as shown in FIG. 19 - FIG. 20, so as to improve the support properties of the seat cushion in the regions in need of support and the comfort of users.

### Example 3

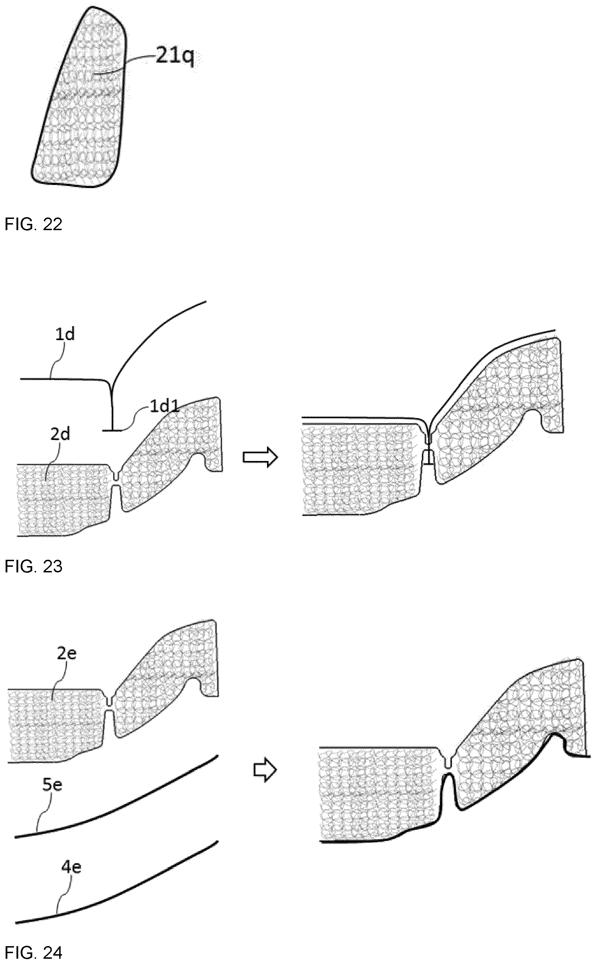

As shown in FIG. 21, an automobile interior part according to yet another preferred embodiment of the present disclosure is a head rest, which comprises a sleeve 1c and a thermoplastic fiber web structure 2c forming a support structure. As shown in FIG. 22, the thermoplastic fiber web structure 2c is formed of polyamide elastomer fiber filaments 21q which filaments are melt-bonded together through melt extrusion molding. Returning to FIG. 21, the sleeve 1c has a thermoplastic strip 1c1, which is melt fixed and connected to the thermoplastic fiber web structure 2c. The material of the thermoplastic strip 1c1, which is the same as the material of the thermoplastic fiber web structure 2c, is also a polyamide elastomer that is compatible with the fiber filaments 21q during the hot press process and does not influence the secondary use of the product in the recycling process. It should be understood that if the starting material is a polyamide elastomer, the thermoplastic strip may be nylon 6, or nylon 66.

### Example 4

As shown in FIG. 23, an automobile interior part according to yet another preferred embodiment of the present disclosure is an armrest, which comprises a sleeve 1d and a thermoplastic fiber web structure 2d forming a support structure. The thermoplastic fiber web structure 2d is formed of nylon elastomer fiber filaments through injection molding. The sleeve 1d has an I-shaped plastic piece 1d1 that rotates after insertion into the thermoplastic fiber web structure 2d to fix and connect the sleeve 1d to the thermoplastic fiber web structure 2d.

### Example 5

As shown in FIG. 24, an automobile interior part according to yet another preferred embodiment of the present disclosure is a leg rest, which comprises a thermoplastic fiber web structure 2e forming a support structure and a non-woven fabric 4e. The non-woven fabric 4e is fixed to the thermoplastic fiber web structure 2e by means of an adhesive 5e. In this example, the material of the non-woven fabric 4e is PET, and the material of the adhesive 5e is a thermoplastic adhesive.

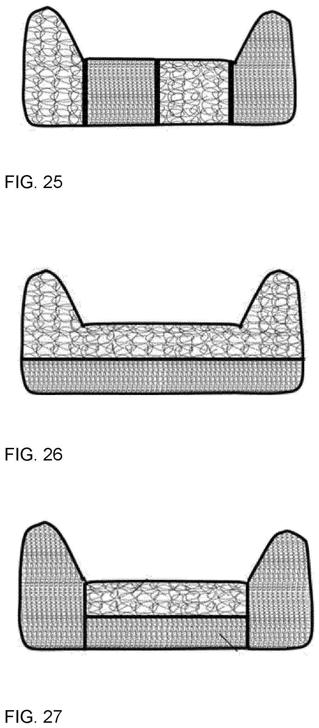

Those described above are only the preferred examples of the present disclosure, which are not used for limiting the scope of the present disclosure. Various changes can also be made to the above examples of the present disclosure. For example, the automobile interior part shown in FIG. 25 is a front cushion which comprises independently provided transverse pieces (for example, four pieces to form four local regions), the pieces being then melt-spliced. For another example, the automobile interior part shown in FIG. 26 is a front backrest which comprises independently provided vertical pieces, the pieces being then melt-spliced. Also, for example, the front backrest shown in FIG. 27 may comprise four local regions, i.e., two local regions on the left and right flanks and two local regions longitudinally overlapped in the middle. The pieces constituting these local regions are melt-spliced to form the front backrest of FIG. 27. In the example of FIG. 25 or 27, the four local regions may, for example, have three or four densities that differ from one another. For example, in FIG. 27, the density of the middle upper part can be 60 kg/m³, the density of the middle lower part can be 80 kg/m³, and the density of the two flanks can be 100 kg/m³.

All simple and equivalent changes and modifications made according to the contents described in the claims and specification of the present disclosure fall within the scope for which protection is sought in the claims of the present disclosure. What the present disclosure does not describe in detail are all conventional technical contents.

## Claims

1. A thermoplastic fiber web structure, **characterized in that** the thermoplastic fiber web structure forms a support structure through fiber filaments that are melt-bonded together, the fiber filaments being formed from a thermoplastic elastomer material.

2. The thermoplastic fiber web structure as claimed in claim 1, **characterized in that** the thermoplastic elastomer is at least one selected from polyolefin elastomers, polyester elastomers and polyamide elastomers.

3. The thermoplastic fiber web structure as claimed in claim 2, **characterized in that** the polyolefin elastomer is a polyalphaolefin elastomer.

4. The thermoplastic fiber web structure as claimed in claim 2, **characterized in that** the hard segment of the polyester elastomer is polybutylene terephthalate or polyethylene terephthalate, and the soft segment is a polyester segment or a polyether segment.

5. The thermoplastic fiber web structure as claimed in claim 2, **characterized in that** the polyamide elastomer is a nylon elastomer.

6. The thermoplastic fiber web structure as claimed in claim 1, **characterized in that** the thermoplastic fiber web structure has at least two local regions with different densities, and the density difference between the at least two local regions is from 5 to 70 kg/m³, preferably 10 to 50 kg/m³ or 15 to 30 kg/m³.

7. The thermoplastic fiber web structure as claimed in claim 6, **characterized in that** the at least two local regions in the thermoplastic fiber web structure have different density distributions of fiber filaments.

8. The thermoplastic fiber web structure as claimed in claim 1, **characterized in that** the fiber filaments are distributed in the thermoplastic fiber web structure partly or wholly in an ordered arrangement and stacking manner.

9. The thermoplastic fiber web structure as claimed in claim 6, **characterized in that** the fiber filaments in at least one local region are distributed therein partly or wholly in an orderly arrangement and stacking manner.

10. The thermoplastic fiber web structure as claimed in claim 1, **characterized in that** the fiber filaments are hollow fiber filaments and/or solid fiber filaments.

11. The thermoplastic fiber web structure as claimed in claim 10, **characterized in that** the wall thickness of the hollow fiber filaments is between 0.1 and 1 mm, and/or the diameter of the solid fiber filaments is between 0.5 and 2 mm.

12. The thermoplastic fiber web structure as claimed in claim 1, **characterized in that** the overall density of the thermoplastic fiber web structure is between 25 and 150 kg/m³, preferably between 35 and 120 kg/m³.

13. An automobile interior part, **characterized in that** the automobile interior part comprises a thermoplastic fiber web structure as claimed in any of claim 1-12 and a sleeve and/or fabric, such as non-woven fabric, woven fabric or felt, fastened to the thermoplastic fiber web structure.

14. The automobile interior part as claimed in claim 13, **characterized in that** the automobile interior part is a seat backrest, a seat cushion, a head rest, an armrest, or a leg rest.

15. The automobile interior part as claimed in claim 13, **characterized in that** the sleeve has a sleeve strip that is hook fixed and connected to the thermoplastic fiber web structure by a fastener having an opening.

16. The automobile interior part as claimed in claim 15, **characterized in that** the material of the fastener is the same as that of the thermoplastic fiber web structure.

17. The automobile interior part as claimed in claim 15, **characterized in that** the fastening window of the thermoplastic fiber web structure corresponding to the fastener is compacted.

18. The automobile interior part as claimed in claim 15, **characterized in that** the automobile interior part comprises a fabric having a formed steel wire, the sleeve strip and the formed steel wire being hook fixed and connected to the thermoplastic fiber web structure by a fastener.

19. The automobile interior part as claimed in claim 13, **characterized in that** the sleeve has a thermoplastic strip that is melt fixed and connected to the thermoplastic fiber web structure.

20. The automobile interior part as claimed in claim 19, **characterized in that** the material of the thermoplastic strip is the same as that of the thermoplastic fiber web structure.

21. The automobile interior part as claimed in claim 13, **characterized in that** the sleeve has an I-shaped or Y-shaped plastic piece that rotates after insertion into the thermoplastic fiber web structure to fix and connect the sleeve to the thermoplastic fiber web structure.

22. The automobile interior part as claimed in claim 13, **characterized in that** the fabric is fixed to the thermoplastic fiber web structure by means of an adhesive.
